# EUROPEAN PATENT SPECIFICATION

(11) **EP 3 059 488 B1**
(45) Date of publication and mention of the grant of the patent: **05.12.2018**
(21) Application number: 15187639.8
(22) Date of filing: 30.09.2015
(51) Int. Cl.: F17C 13/04, F17C 13/12, F16K 1/30

(54) **VALVE WITH REFILL-PREVENTING DEVICE FOR DISPOSABLE CONTAINERS OF GAS UNDER PRESSURE**
VENTIL MIT NACHFÜLLVERHINDERNDER VORRICHTUNG FÜR WEGWERFBEHÄLTER VON DRUCKGAS
SOUPAPE AVEC DISPOSITIF EMPÊCHANT LE REMPLISSAGE POUR DES RÉCIPIENTS JETABLES DE GAZ SOUS PRESSION

(30) Priority: 23.02.2015 IT MI20150258
(43) Date of publication of application: 24.08.2016
(73) Proprietor: Gas Tec S.r.l., 80131 Napoli (NA) (IT)
(72) Inventor: MIGLIACCIO, Marco, 84079 Vibonati SA (IT); MAROTTA, Carmine, 80100 Napoli NA (IT); GENTA, Corrado, 81020 San Nicola la Strada CE (IT)
(74) Representative: Barbaro, Gaetano

(56) References cited:
- EP-B1- 0 525 449
- EP-B1- 1 467 131
- WO-A1-2012/107714
- GB-A- 2 329 703
- US-A1- 2004 036 046
- US-A1- 2004 144 803

## Description

The present invention generally relates to disposable containers of gas under pressure and in particular to a valve with refill-preventing device for these containers.

Containers of pressurized gas are generally filled according to suitable security protocols and then distributed to the users. Upon exhaustion of the gas content, these containers are sent to collection centers so as to be refilled, or to be disposed if they are of a single-use type. It is known that on economic grounds users sometimes attempt to recharge disposable pressurized containers although not allowed, which on the one hand involves filling of impurities together with a refill of gas and, on the other hand, it may lead to security problems, gas leaks and explosion risks.

For these reasons, there have been developed valves for disposable containers of pressurized gas that are called "refill-preventing" valves, i.e. valves configured to prevent filling operations of a disposable container when it is completely empty. These valves are subject to the standard UNI EN ISO 13340.

Patent EP 525 449 B1, that is considered the closest prior art to the invention, upon which the preamble of the independent claim 1 is based, discloses an example of a valve with a refill-preventing device, the valve comprising a body wherein coaxial upper and lower chambers are formed. The chambers fluidly communicate through a coaxial channel arranged therebetween. On the top of the valve body there is formed a first aperture in fluid communication with the upper chamber, while on the bottom of the valve body there is formed a second aperture in fluid communication with the lower chamber that allows the inflow of a pressurized gas fed from a container towards the valve body.

A piston is slidably arranged in the lower chamber. At one end of the piston a stem is coaxially restrained. The stem stretches out through the intermediate channel and protrudes into the upper chamber. At the end of the piston restrained to the stem there is a first sealing element which closes the inlet of the intermediate channel located in the lower chamber when the pressure of the gas present in the container urges the piston. A second sealing element is restrained close to the free end of the stem, which is located in the upper chamber. In order to try to fill a gas into the container it is necessary to manually operate the piston so as to move it away from the inlet of the intermediate channel located in the lower chamber. This is impossible because, due to the manual displacement and to the pressure of the gas flowing in, the second sealing element restrained to the piston stem closes the inlet of the intermediate channel located in the upper chamber, thus preventing passage of the gas flow.

Further examples of valves provided with a refill-preventing device for containers of pressurized gas are described in patents US 3552432, US 3589397 and US 3985332.

Patent EP 1467131 B1 discloses a valve arrangement comprising a valve housing having a through bore extending between a first side of the valve housing devised to face a container interior and a second side of the valve housing devised to face away from said container interior, and valve closing means for closing the through bore. A closing member of the closing means is devised to seal the through bore responsive to a positive gas pressure difference between the first and second sides. The closing member is operable from the second side for equalizing the pressure difference and thereby releasing and separating the closing member from the valve housing through the first side. The closing member is separated from the valve housing as soon as tapping of the container is initiated, and the closing member falls down into the container. Hence, once tapping of the content of the disposable container is initiated, its refilling is no longer possible.

Despite the existence of numerous types of refill-preventing valves for containers of pressurized gas there is still the need to improve them, in particular concerning the configuration and arrangement of their components and their assembly mode, which is an object of the present invention. Said object is achieved by a valve with refill-preventing device, whose main features are specified in the first claim, while other features are specified in the remaining claims.

An idea of solution underlying the invention is to provide a valve with refill-preventing device whose structure resembles the valve structure described in patent EP 525 449 B1, but wherein the two sealing elements allowing to prevent the flow of a gas from a container of pressurized gas and towards the external environment, respectively, are arranged at the opposite ends of the piston. Unlike the valve of patent EP 525 449 B1, wherein the second sealing element can be mounted on the stem only once the latter and the piston have been fitted into the valve body, in the valve according to the invention the piston, the stem and the sealing elements are fully assembled outside the valve body and fitted therein as a subassembly in a single operation, thus simplifying the assembly process of the refill-preventing valve.

It is also an idea of solution underlying the invention to configure the stem restrained to the piston such that it stretches out through the intermediate channel and upper chamber and protrudes beyond the latter through a first aperture formed in the top of the valve body. Thanks to this feature, by acting from the outside of the valve, it is possible to easily block the stem in such a position as to maintain the piston between its two end-stroke, closing positions so as to carry out filling of a container under pressure. To this aim, the stem may advantageously comprise a circumferential groove formed on the portion projecting from the aperture formed in the top of the valve body and configured for accommodating an elastic ring.

The stem features an intermediate portion of reduced cross section, so that, the end portion of the stem can be removed by breaking it once the container has been filled. The stem thus remains completely hidden inside the upper chamber of the valve body and may not be accessed from the outside.

According to a preferred embodiment of the invention, the stem is restrained in a removable manner to the piston and has a shoulder which allows to clamp the first sealing element against the latter. The second sealing element is mounted on the piston by way of a pin that, similarly to the stem, comprises a shoulder which allows to clamp the second sealing element against the piston. Therefore, the subassembly formed by the piston, the stem, the first and the second sealing elements and the pin has a modular structure that is simple and cheap to manufacture and to assemble.

Further advantages and features of the valve with refill-preventing device according to the present invention will become clear to those skilled in the art from the following detailed and non-limiting description of embodiments thereof with reference to the accompanying drawings wherein:
- Figure 1 is a longitudinal sectional view showing a valve with refill-preventing device according to the invention in an assembled configuration;
- Figure 2 is an exploded perspective view of the valve of Figure 1;
- Figure 3 is an exploded perspective view showing the valve subassembly formed by piston, stem, first and second sealing elements and pin according to an embodiment of the invention;
- Figures 4 to 7 are perspective views of the valve with the valve body partially cut out, showing successive installation steps of the valve according to the invention.

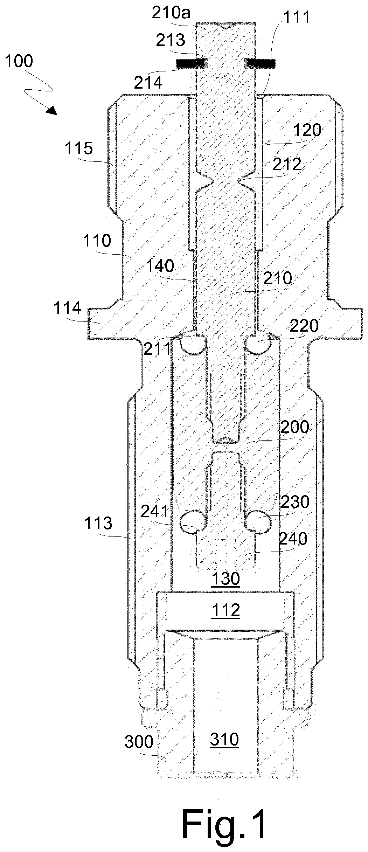

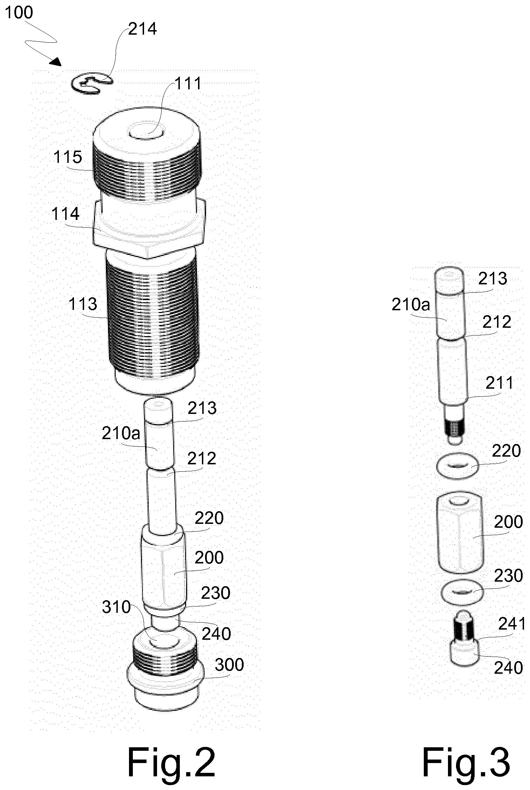

Referring to figures 1 and 2, a valve with refill-preventing device according to the invention is generally indicated by reference numeral 100.

The valve 100 includes a body 110 having a substantially cylindrical shape that extends in a vertical direction V. With reference to said vertical direction V, an upper chamber 120 and a lower chamber 130 are formed within the body 110. The upper and lower chambers 120, 130 have respective cylindrical shapes and fluidly communicate through an intermediate channel 140 also having a cylindrical shape. The chambers 120, 130 are preferably coaxial and the intermediate channel 140 is preferably arranged coaxially thereto.

A first aperture 111 is formed on the top of the body 110 and serves to put the upper chamber 120 into fluid communication with the external environment; a second aperture 112 is formed on the bottom of the body 110 an serves to put the lower chamber 130 in fluid communication with a container of pressurized gas (not shown).

In order to allow assembly of the valve 100 on a container for pressurized gas, the body 110 may be for example provided with a thread 113 formed on the portion housing the lower chamber 130 and configured so as to allow screwing of the body 110 on a corresponding threaded hole of the container. To this aim, the body 110 also comprises a flange 114, for example having an hexagonal shape, which allows to maneuver the valve 100 e.g. by way of an open-jawed spanner.

In the illustrated embodiment, the body 110 of the valve 100 further comprises a second thread 115 formed on the portion wherein the upper chamber 120 is formed. The second thread 115 allows assembly of a spray cap or of an equivalent dispensing means.

The valve also comprises a piston 200 is slidably arranged in the lower chamber 130. At one end of the piston 200 a stem 210 is coaxially restrained. The stem 210 stretches out through the intermediate channel 140 and upper chamber 120. As shown in figure 1, the stem 210 protrudes beyond the upper chamber 120 through the first aperture 111.

In order to allow passage of a gas flow through the body 110 of the valve 100, the piston 200 comprises in known manner at least one flat surface suitable to define a passage with the cylindrical wall of the lower chamber 130. In the illustrated embodiment, the piston 200 is e.g. shaped as an hexagonal prism. The stem 210 instead has a cylindrical shape whose diameter is slightly smaller than the diameter of the intermediate channel 140, thus defining therewith a passage having the shape of a circular crown in cross section.

At the end of the piston 200 restrained to the stem 210 a first sealing element 220 like e.g. an O-ring is arranged. A second sealing element 230 like e.g. an O-ring is restrained at the opposite end of the piston 200, i.e. the end facing the second aperture 112.

The piston 200 is axially movable within the lower chamber 130 between a first end position, wherein the first sealing element 220 seals the inlet of the intermediate channel 140, and a second end position, wherein the second sealing element 230 tightly closes the second aperture 112.

The second end position is defined by an abutment member 300 fitted in the second aperture 112. The abutment member 300 has e.g. an annular shape and comprises a through channel 310 allowing passage of a flow of gas from a container towards the second aperture 112 and hence towards the lower chamber 130 of the valve 100.

With reference to figure 2, the abutment member 300 is removably restrained to the body 110 of the valve 100, for example by way of a threaded connection, which allows mounting of the piston 200 and the stem 210 with the sealing elements 220, 230 through the second aperture 112 in a simple and quick manner.

According to a preferred embodiment of the invention, shown in figure 3, the piston stem 210 is removably restrained to the piston 200, for example through a threaded connection, and has a shoulder 211 which allows to clamp the first sealing element 220 against the piston 200.

Still with reference to the embodiment illustrated in Figure 3, the second sealing element 230 may be mounted on the piston by way of a pin 240, for example a threaded pin, which, similarly to the stem 210, comprises a shoulder 241 allowing to clamp the second sealing element 230 against the piston 200.

The subassembly formed by the piston 200, the stem 210, the first and second sealing elements 220, 230, as well as by the threaded pin 240, therefore features a modular structure that is simple and cheap to manufacture and assemble.

Still with reference to figures 1 to 3, as mentioned above the stem 210 protrudes from the first aperture 111 of the body 110 of the valve 100. The stem 210 comprises an intermediate portion 212 having a reduced cross section that allows removal of its end portion 210a once filling of a pressurized container with a gas is complete, as it will be described in detail hereinafter.

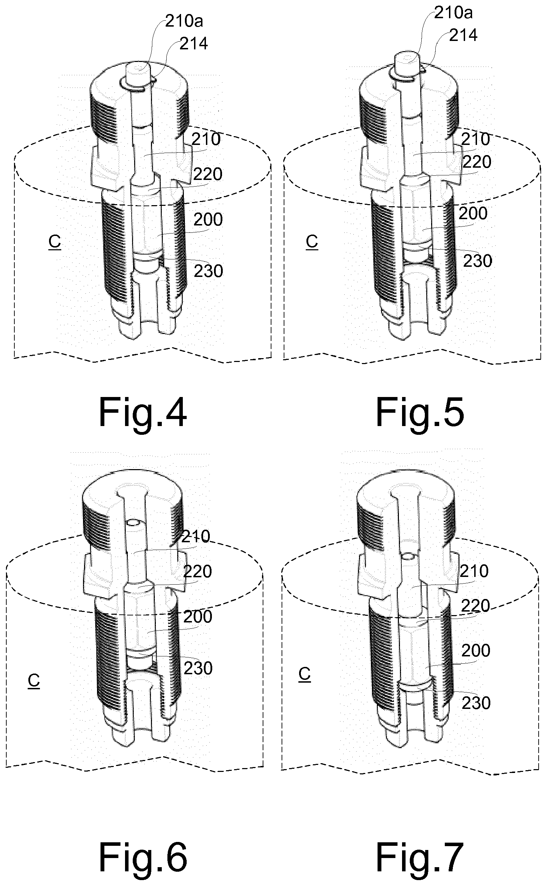

Now referring to figures 4 to 7, the installation process of the valve with refill-preventing device on a container for pressurized gas is described. The container is indicated with a letter C and is schematically shown by way of dashed lines.

Figure 4 shows a valve 100 according to the invention wherein the piston 200 is in an intermediate position between the first and the second end positions described above. In this intermediate position both the first and the second apertures 111, 112 of the valve 100 are clear and it is therefore possible to carry out filling of the container C.

In order to maintain the piston 200 in the intermediate position, the stem 210 may advantageously comprise a circumferential groove 213 formed on the end portion 210a where this protrudes from the first aperture 111 and configured so as to receive a resilient ring 214, for example Seeger type ring. This feature of the invention allows to lock the position of the piston 200 in a simple and precise manner. In fact, due to its own weight the piston 200 tends to fall toward the aperture 112 and the resilient ring 214 stops it by abutting on the top of the body 110 of the valve 100.

Alternatively to the use of a circumferential groove and a resilient ring, it is possible to use a clamp or equivalent locking means acting on the lateral surface of the end portion 210a of the stem 210.

With reference to figure 5, once completed filling of the container, the piston 200 is urged by the pressure of the gas and is thus moved to the first end position wherein the first sealing element 220 seals the inlet of the intermediate channel 140, so preventing passage of gas from the lower chamber 130 to the upper chamber 120 and hence outwards through the first aperture 111. This condition of the valve corresponds to that shown in the longitudinal section of figure 1.

As shown in figure 6, in this position the end portion 210a of the stem 210 is removed by separating it at the intermediate portion 212 of reduced cross section. Unlike the assembly configuration shown in figure 1, removal of the end portion 210a of the stem sets the valve 100 in an operating configuration, wherein the piston stem 210 is fully housed inside the body 110 and is thus not accessible from the outside. Therefore it is impossible to manually change the position of the piston so as to perform unauthorized refilling operations. This allows the valve 100 to carry out its refill-preventing function.

In the operative configuration of the valve shown in figure 6, the piston 200 is urged towards the inlet of the intermediate channel 140 by the gas pressure and thus prevents gas leakages. Hence, gas delivery is possible only by pressing the stem 210 downwards by way of delivery means mounted atop the body 110 of the valve 100, like e.g. a spray cap or an equivalent actuator.

Now referring to figure 7, when the gas container is empty, the piston 200 is no longer subject to the thrust of the pressurized gas and falls by gravity against the abutment member 300. In this position the second sealing element 230 closes the second aperture 112. Therefore that any attempt to refill the container C by supplying a flow of pressurized gas from the first aperture 111 of the body 110 of the valve 100 would be useless, because the gas would urge the piston 200 against the aperture 112 thus resulting in a higher compression of the second sealing element 230 against the latter and hence increasing the sealing action of the container C.

The present invention has been described with reference to preferred embodiments thereof. It will be understood that there may be further embodiments relating to the same inventive idea, as defined in the scope of protection of the claims set out below.

## Claims

1. A valve with refill-preventing device (100) for disposable containers of pressurized gas, said valve comprising:
i) a body (110) having a substantially cylindrical shape wherein a cylindrical upper chamber (120) and lower chamber (130) are formed, said chambers being arranged in fluid communication through an intermediate channel (140) having a cylindrical shape, said body (110) comprising a first aperture (111) formed on its top and adapted to put said upper chamber (120) in fluid communication with the outside, and a second aperture (112) formed on its bottom and adapted to put said lower chamber (130) in fluid communication with a container of pressurized gas;
ii) a piston (200) arranged in said lower chamber (130) and having a stem (210) that is coaxially restrained at one of its ends, said stem (210) stretching out through said intermediate channel (140) and said upper chamber (120);
iii) a first sealing element (220) arranged at the end of the piston (200) restrained to the stem (210);
iv) a second sealing element (230),
wherein the piston (200) is axially movable in the lower chamber (130) between a first end position, wherein the first sealing element (220) seals an inlet of the intermediate channel (140), and a second end position,
**characterized in that** the stem (210) comprises an intermediate portion (212) having a reduced cross- section configured to allow removal of an end portion (210a) thereof, **in that** the stem (210) protrudes beyond the upper chamber (120) through said first aperture (111),
**in that** said second end position of the piston (200) is defined by an abutment member (300) fitted in said second aperture (112) and comprising a trough channel (310) adapted to allow passage of a gas flow from a container towards the second aperture (112), **in that** the second sealing element (230) is restrained to the end of the piston (200) opposite to the end restrained to the stem (210) and facing the second aperture (112), and **in that** in said second end position the second sealing element (230) seals the second aperture (112).

2. A valve (100) according to claim 1, wherein said abutment member (300) has an annular shape comprising a through channel (310) adapted to allow passage of a gas flow from a container towards the second aperture (112).

3. A valve (100) according to claim 2, wherein the abutment member (300) is restrained in a removable manner to the body (110) of the valve (100).

4. A valve (100) according to any one of claims 1 to 3, wherein the stem (210) is restrained to the piston (200) in a removable manner and comprises a shoulder (211) configured to clamp the first sealing element (220) against the piston (200), and wherein the second sealing element (230) is mounted on the piston (200) by way of a pin (240) comprising a shoulder (241) configured to clamp the second sealing element (230) against the piston (200).

5. A valve (100) according to any one of claims 1 to 4, wherein the stem (210) comprises a circumferential groove (213) formed on its end portion (210a) where the portion protrudes from the first aperture (111), said circumferential groove being configured to receive an elastic ring (214).

6. A disposable container for pressurized gas comprising a valve with a refill-preventing device according to any of claims 1 to 5.

## Patentansprüche

1. Ein Ventil mit einer nachfüllverhindernden Einrichtung (100) für Wegwerfbehälter mit Druckgas, wobei das besagte Ventil umfasst:
i) einen Körper (110)mit einer substantiell zylindrische Gestalt, worin eine zylindrische obere Kammer (120) und untere Kammer (130) ausgebildet ist, wobei die besagten Kammern in einer Fluidverbindung durch einen Zwischenkanal (140) von zylindrischer Gestalt stehen, wobei der besagte Körper (110) eine erste Öffnung (111) aufweist, die an seiner Oberseite ausgebildet und dazu ausgelegt ist, eine Fluidverbindung zwischen der besagten oberen Kammer (120) und dem Außenraum herzustellen, sowie eine zweite Öffnung (112), die an seiner Unterseite ausgebildet ist und dazu ausgelegt ist, eine Fluidverbindung zwischen der besagten unteren Kammer (130) und dem Druckgas-Behälter herzustellen;
ii) einen Kolben (200), der in der besagten unteren Kammer (130) angeordnet ist und eine Stange (210) aufweist, die koaxial an einem ihrer Enden gehalten wird, wobei sich die besagte Stange (210) durch den besagten Zwischenkanal (140) und die besagte obere Kammer (120) erstreckt;
iii) ein erstes Dichtungselement (220), das an demjenigen Ende des Kolbens (200) angeordnet ist, welches an der Stange (210) gehalten ist;
iv) ein zweites Dichtungselement (230),
wobei der Kolben (200) in der unteren Kammer (130) zwischen einer ersten Endposition, an welcher das erste Dichtungselement (220) den Einlass des Zwischenkanals (140) abdichtet, und einer zweiten Position axial beweglich ist,
**gekennzeichnet dadurch, dass** die Stange (210) einen Zwischenbereich (212) mit einem verringerten Querschnitt aufweist, der dazu ausgelegt ist, das Entfernen eines Endbereichs (210a) zu erlauben,
dadurch, dass die Stange (210) über die obere Kammer (120) durch die erste Öffnung (111) herausragt,
dadurch, dass die zweite Endposition des Kolbens (200) durch ein Anlageelement (300) vorgegeben ist, das in die besagte zweite Öffnung (112) eingepasst ist und einen Durchgangskanal (310) aufweist, der dazu geeignet ist, den Durchfluss eines Gasstroms von einem Behälter in Richtung zu der zweiten Öffnung (112) zu erlauben,
dadurch, dass das zweite Dichtungselement (230) an demjenigen Ende des Kolbens (200) gehalten ist, welches dem an dem Schaft (210) gehaltenen Ende gegenüber liegt und der zweiten Öffnung (112) zugewandt ist,
und dadurch, dass in der besagten zweiten Endposition das zweite Dichtungselement (230) die zweite Öffnung (112) abdichtet.

2. Ein Ventil (100) gemäß Anspruch 1, wobei das besagte Anlageelement (300) eine ringförmige Gestalt aufweist, mit einem Durchgangskanal (310), der dazu geeignet ist, den Durchfluss eines Gasstroms von einem Behälter in Richtung zu der zweiten Öffnung (112) zu erlauben.

3. Ein Ventil (100) gemäß Anspruch 2, wobei das Anlageelement (300) an dem Körper (110) des Ventils (100) auf abnehmbare Weise gehalten ist.

4. Ein Ventil (100) gemäß irgendeinem der Ansprüche 1 bis 3, wobei die Stange (210) an dem Kolben (200) auf abnehmbare Weise gehalten ist und eine Schulter (211) aufweist, die dazu ausgelegt ist, das erste Dichtungselement (220) gegen den Kolben (200) zu klemmen, und wobei das zweite Dichtungselement (230) mittels eines Stiftes (240) an dem Kolben (200) befestigt ist und eine Schulter (241) aufweist, die dazu ausgelegt ist, das zweite Dichtungselement (230) gegen den Kolben zu klemmen.

5. Ein Ventil (100) gemäß irgendeinem der Ansprüche 1 bis 4, wobei die Stange (210) eine rundum laufende Nut (213) aufweist, die an ihrem Endbereich (210a) ausgebildet ist, wo der Bereich aus der ersten Öffnung (111) herausragt, wobei die rundum laufende Nut dazu ausgelegt ist, einen elastischen Ring (214) aufzunehmen.

6. Ein Wegwerfbehälter für Druckgas, umfassend ein Ventil mit einer nachfüllverhindernden Einrichtung nach einem der Ansprüche 1 bis 5.

## Revendications

1. Valve avec dispositif anti-remplissage (100) pour récipients de gaz sous pression jetables, ladite valve comprenant :
i) un corps (110) ayant une forme sensiblement cylindrique, dans lequel sont formées une chambre supérieure cylindrique (120) et une chambre inférieure (130), lesdites chambres étant agencées en communication de fluide par le biais d'un canal intermédiaire (140) ayant une forme cylindrique, ledit corps (110) comprenant une première ouverture (111) formée sur sa partie supérieure et adaptée pour placer ladite chambre supérieure (120) en communication de fluide avec l'extérieur, et une seconde ouverture (112) formée sur son fond et adaptée pour placer ladite chambre inférieure (130) en communication de fluide avec un récipient de gaz sous pression ;
ii) un piston (200) agencé dans ladite chambre inférieure (130) et ayant une tige (210) qui est retenue de manière coaxiale au niveau de l'une de ses extrémités, ladite tige (210) s'étirant à travers ledit canal intermédiaire (140) et ladite chambre supérieure (120) ;
iii) un premier élément d'étanchéité (220) agencé à l'extrémité du piston (200) retenue sur la tige (210) ;
iv) un second élément d'étanchéité (230),
dans lequel le piston (200) est mobile de manière axiale dans la chambre inférieure (130) entre une première position d'extrémité, dans laquelle le premier élément d'étanchéité (220) scelle une entrée du canal intermédiaire (140) et une seconde position d'extrémité,
**caractérisée en ce que** :
la tige (210) comprend une partie intermédiaire (212) ayant une section transversale réduite configurée pour permettre le retrait de sa partie d'extrémité (210a),
**en ce que** la tige (210) fait saillie au-delà de la chambre supérieure (120) par ladite première ouverture (111),
**en ce que** ladite seconde position d'extrémité du piston (200) est définie par un élément de butée (300) ajusté dans ladite seconde ouverture (112) et comprenant un canal débouchant (310) adapté pour permettre le passage d'un écoulement de gaz à partir d'un récipient vers la seconde ouverture (112),
**en ce que** le second élément d'étanchéité (230) est retenu sur l'extrémité du piston (200) opposée à l'extrémité retenue sur la tige (210) et faisant face à la seconde ouverture (112),
et **en ce que** dans ladite seconde position d'extrémité, le second élément d'étanchéité (230) scelle la seconde ouverture (112).

2. Valve (100) selon la revendication 1, dans laquelle ledit élément de butée (300) a une forme annulaire comprenant un canal débouchant (310) adapté pour permettre le passage d'un écoulement de gaz d'un récipient vers la seconde ouverture (112).

3. Valve (100) selon la revendication 2, dans laquelle l'élément de butée (300) est retenu d'une manière amovible sur le corps (110) de la valve (100).

4. Valve (100) selon l'une quelconque des revendications 1 à 3, dans laquelle la tige (210) est retenue sur le piston (200) d'une manière amovible et comprend un épaulement (211) configuré pour serrer le premier élément d'étanchéité (220) contre le piston (200), et dans laquelle le second élément d'étanchéité (230) est monté sur le piston (200) au moyen d'une broche (240) comprenant un épaulement (241) configuré pour serrer le second élément d'étanchéité (230) contre le piston (200).

5. Valve (100) selon l'une quelconque des revendications 1 à 4, dans laquelle dans laquelle la tige (210) comprend une rainure circonférentielle (213) formée sur sa partie d'extrémité (210a) où la partie fait saillie de la première ouverture (111), ladite rainure circonférentielle étant configurée pour recevoir une bague élastique (214).

6. Récipient de gaz sous pression jetable comprenant une valve avec un dispositif anti-remplissage selon l'une quelconque des revendications 1 à 5.
